# EUROPÄISCHE PATENTANMELDUNG

(11) **EP 1 270 144 A1**
(43) Veröffentlichungstag der Anmeldung: **02.01.2003**
(21) Anmeldenummer: 01115240.2
(22) Anmeldetag: 23.06.2001
(51) Int. Cl.: B23Q 37/00, B23B 3/06

(54) **Maschine zur spanenden Bearbeitung von insbesondere stangenförmigen Werkstücken**

(71) Anmelder: Maschinenfabrik Berthold Hermle Aktiengesellschaft, D-78559 Gosheim (DE)
(72) Erfinder: Schwörer, Tobias, Dipl.-Ing.(FH), 78598 Königsheim (DE); Bernhard, Franz-Xaver, 78549 Spaichingen (DE)
(74) Vertreter: Vetter, Hans, Dipl.-Phys. Dr.

(57) **Zusammenfassung**

Es wird eine Maschine zur spanenden Bearbeitung von Werkstücken (10), insbesondere stangenförmigen Werkstücken, vorgeschlagen, die zwei miteinander gekoppelte Werkstück-Spanneinrichtungen (17, 19) besitzt. Ein mit einer Drehantriebsvorrichtung versehener Bearbeitungskopf 12 dient zur Aufnahme von Bearbeitungswerkzeugen (27). Eine Schlittenanordnung (13, 16) dient zur Relativbewegung von Werkstück-Spanneinrichtung (17 bzw. 19) und Bearbeitungskopf (12) in den drei Raumrichtungen (X,Y,Z) wobei die Werkstück-Spanneinrichtungen (17, 19) in wenigstens einer der drei Raumrichtungen bewegbar ist. Eine mit einer Schwenkeinrichtung versehene Greifeinrichtung (21) dient zum Ergreifen und Umsetzen eines in einer ersten Spannposition bearbeiteten und vom Werkstück (10) abgetrennten Werkstückteils in die zweite Werkstück-Spanneinrichtung (19), wobei diese mit einem Linearantrieb versehene Greifeinrichtung (21) senkrecht zu der wenigstens einen Bewegungsrichtung (X) der Werkstück-Spanneinrichtungen (17, 19) bewegbar ist.

## Beschreibung

Die Erfindung betrifft eine Maschine zur spanenden Bearbeitung von Werkstücken, insbesondere stangenförmigen Werkstücken, mit den Merkmalen des Oberbegriffs des Anspruchs 1. Bei einer derartigen, aus der DE 199 19 647 A1 bekannten Maschine wird zunächst das Stangenende einer in einer Werkstück-Spanneinrichtung eingespannten Stange mittels eines in einem Spindelkopf eingespannten Bohr- oder Fräswerkzeugs bearbeitet, dann wird dieser Endbereich mittels des Greifers eines Manipulators ergriffen und abgeschnitten, dann durch zwei Schwenkbewegungen einer Spannstation zugeführt, in der der das Werkstück haltende Greifer festgespannt wird, und schließlich erfolgt dort die Bearbeitung des zweiten Endbereichs des abgetrennten Stangenteils.

Nachteilig an der bekannten Anordnung ist die komplizierte Überführung des abgetrennten Stangenteils durch zwei Schwenkbewegungen des Manipulators unter die komplizierte Spannstation, die den gesamten Greifer halten muss. Darüber hinaus muss der Spindelkopf zur Bearbeitung des zweiten Endbereichs von der Werkstück-Spanneinrichtung bis zur Spannstation verfahren werden.

Eine Aufgabe der vorliegenden Erfindung besteht darin, eine derartige Maschine so zu verbessern, dass bei kostengünstigerer Konstruktion einfachere, schnellere und kürzere Bewegungen bei der Bearbeitung ablaufen.

Diese Aufgabe wird erfindungsgemäß durch eine Maschine mit den Merkmalen des Anspruchs 1 gelöst.

Durch die Kopplung der beiden Werkstück-Spanneinrichtungen wird für jede Bewegungsart nur eine Antriebsvorrichtung benötigt und beide Werkstück-Spanneinrichtungen sind dadurch beweglich, so dass der Bearbeitungskopf zur Bearbeitung der beiden Endbereiche des Werkstückteils selbst keine großen Bewegungen ausführen muss. In Verbindung mit dem Linearantrieb der Greifeinrichtung ist beim Umsetzen des Werkstückteils von der ersten Werkstück-Spanneinrichtung in die zweite Werkstück-Spanneinrichtung nur eine einfache Schwenkbewegung erforderlich. Durch die Linearbewegung der Greifeinrichtung kann das abgetrennte und verschwenkte Werkstückteil in einfacher Weise in die zweite Werkstück-Spanneinrichtung eingeschoben werden, so dass ein Festspannen der Greifeinrichtung entfallen kann. Die zweite Werkstückspanneinrichtung kann dadurch beispielsweise als einfaches Spannfutter ausgebildet sein.

Durch die in den Unteransprüchen aufgeführten Maßnahmen sind vorteilhafte Weiterbildungen und Verbesserungen der im Anspruch 1 angegebenen Maschine möglich.

Die beiden Werkstück-Spanneinrichtungen sind im einfachsten Falle fest miteinander verbunden, so dass alle Bewegungen synchron erfolgen.

In einer günstigen konstruktiven Ausgestaltung ist die erste Werkstück-Spanneinrichtung an einem ersten in einer Bewegungsrichtung motorisch bewegbaren Schlitten angeordnet, der insbesondere in der vertikalen Bewegungsrichtung bewegbar ist, wobei der Bearbeitungskopf an einem zweiten in den anderen beiden Bewegungsrichtungen motorisch bewegbaren Schlitten angeordnet ist. Durch den ersten Schlitten kann der Umsetzvorgang des abgetrennten Werkstückteils unterstützt werden, so dass sehr kleine Bewegungen und dadurch schnelle Umsetzvorgänge möglich werden. Diese kleinen Bewegungen und ein entsprechend kleiner Schwenkbereich der Greifeinrichtung tragen zu einer günstigen Raumausnutzung bei, so dass der Bearbeitungsraum der Maschine besser ausnutzbar ist.

Die erste Werkstück-Spanneinrichtung und/oder der Bearbeitungskopf sind zweckmäßigerweise über einen Schwenkantrieb am jeweiligen Schlitten montiert, so dass eine variablere Bearbeitungsweise, insbesondere auch bei der Seitenbearbeitung des Werkstückteils möglich wird.

In vorteilhafter Weise besitzt die Drehantriebsvorrichtung der ersten Werkstück-Spanneinrichtung wenigstens eine zur Drehbearbeitung geeignete Geschwindigkeitsstufe, wobei vorzugsweise auch die zweite Werkstück-Spanneinrichtung mit einer derartigen Drehantriebsvorrichtung versehen ist. Das Werkstück bzw. Werkstückteil kann dadurch sowohl einer Fräsbearbeitung, wie auch einer Drehbearbeitung unterzogen werden, ohne dass eine Umspannung erforderlich wäre. Lediglich beim Bearbeitungskopf muss ein entsprechender Werkzeugwechsel vorgenommen werden.

Die Greifeinrichtung besitzt in vorteilhafter Weise zwei Spannbacken, von denen jede mit einem rotierbaren Werkstück-Anlageelement versehen ist, so dass die Spannbacken selbst beim Umsetzen des abgetrennten Werkstückteils selbst nicht rotieren müssen. Durch die relativ kleine Masse der Werkstück-Anlageelemente sind dadurch sehr schnelle Rotationsbewegungen bei kleinem Schwenkradius möglich. Dabei sind zweckmäßigerweise unterschiedliche Werkstück-Anlageelemente austauschbar vorgesehen, um ohne Auswechseln der Greifeinrichtung selbst eine Adaption an unterschiedlich geformte Werkstückteile vornehmen zu können.

In einer vorteilhaften konstruktiven Ausgestaltung ist die Greifeinrichtung entlang einer Linearführung bewegbar, die vorzugsweise horizontal verläuft, und die sich von der Arbeitsposition bis zu einer Ablageposition für die beidseitig bearbeiteten Werkstückteile erstreckt. Dadurch kann die Greifeinrichtung nicht nur zur Umsetzung des Werkstückteils zur beidseitigen Bearbeitung, sondern auch zum Wegführen der fertig bearbeiteten Werkstückteile von der Arbeitsposition in eine Ablageeinrichtung eingesetzt werden.

Ein Ausführungsbeispiel der Erfindung ist in der Zeichnung dargestellt und in der nachfolgenden Beschreibung näher erläutert. Es zeigen:
- Figur 1: eine schematische Seitenansicht einer Maschine als Ausführungsbeispiel der Erfindung bei der Bearbeitung des freien Endbereichs eines Stangenmaterials vor dem Abtrennen eines Werkstückteils,
- Figur 2: die Greifeinrichtung in einer vergrößerten Darstellung mit eingespanntem abgetrennten Werkstückteil und
- Figur 3: eine der Figur 1 entsprechende Seitenansicht der Maschine beim Abtrennen des Werkstückteils vom Stangenmaterial.

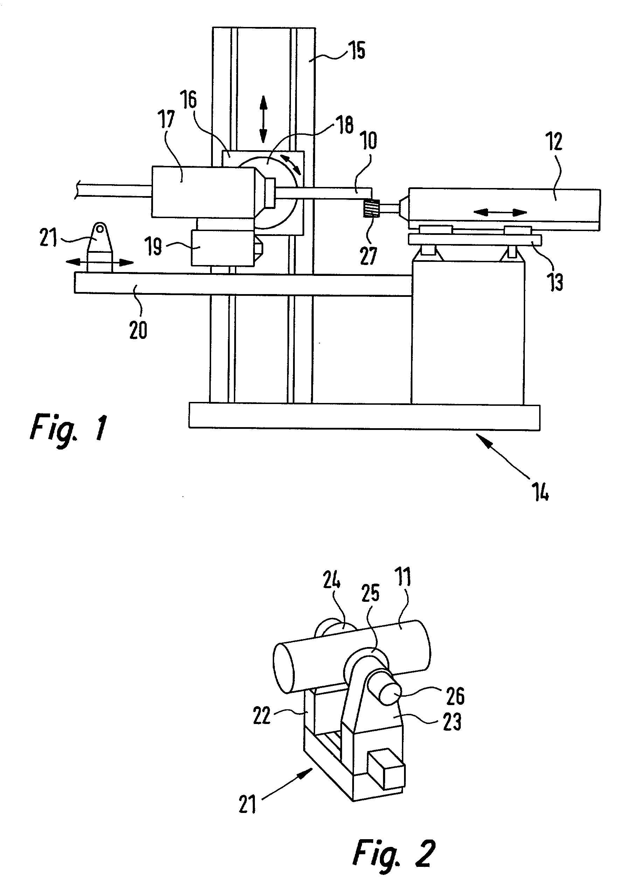

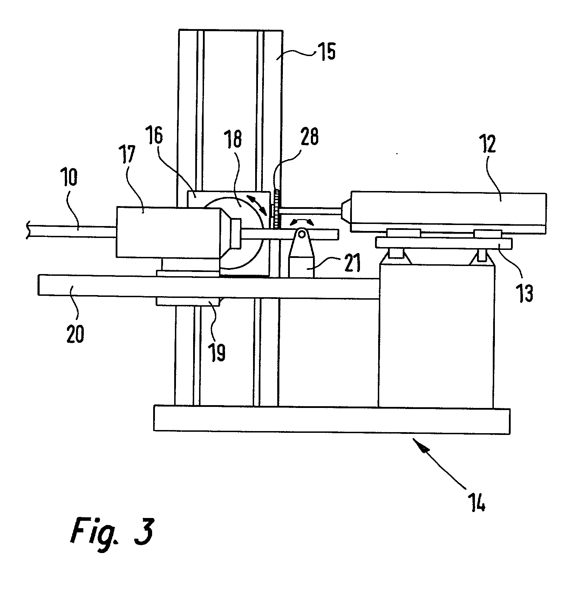

Die in den Figuren 1 und 3 dargestellte Bearbeitungsmaschine dient zum Bearbeiten von Stangenmaterial bzw. stangenförmigen Werkstücken 10, aus denen durch Bearbeiten und Abtrennen eine Vielzahl beidseitig bearbeiteter Werkstückteile 11 gefertigt werden. Selbstverständlich ist auch eine entsprechende Bearbeitung von Werkstücken mit anderen Geometrien möglich. Zur Bearbeitung dient ein Spindelkopf bzw. Bearbeitungskopf 12, der mittels einer Schlittenanordnung 13 in den beiden horizontalen Bewegungsrichtungen (Y,Z) bewegbar ist. Die Schlittenanordnung 13 ist dabei auf einem Maschinenbett bzw. Maschinengestellt 14 der Maschine geführt. Die Antriebsvorrichtungen zur Bewegung der Schlittenanordnung 13 bzw. des Bearbeitungskopfs 12 in den beiden horizontalen Bewegungsrichtungen sind zur Vereinfachung nicht dargestellt.

An einem turmartig hochstehenden Bereich 15 des Maschinengestells 14 ist ein Schlitten 16 in der vertikalen Richtung (X) motorisch verfahrbar. Eine erste Werkstück-Spanneinrichtung 17 zum Festspannen des stangenförmigen Werkstücks 10 ist über einen motorischen Schwenkantrieb 18 am Schlitten 16 schwenkbar angeordnet. Eine zweite Werkstück-Spanneinrichtung 19 ist fest mit der ersten Werkstück-Spanneinrichtung 17 verbunden, so dass sowohl bei der Vertikalbewegung des Schlitten 16, wie auch bei der Schwenkbewegung durch den Schwenkantrieb 18 beide Werkstück-Spanneinrichtungen 17, 19 simultan bewegt werden.

Die erste Werkstück-Spanneinrichtung 17 ist mit einer Drehantriebsvorrichtung versehen, durch die das stangenförmige Werkstück 10 zur Bearbeitung im jeweils erforderlichen Winkel positioniert werden kann. Zum Positionieren wird dabei sehr geringe Rotationsgeschwindigkeit eingestellt bzw. verwendet. Darüber hinaus dient die Drehantriebsvorrichtung auch noch zur schnellen Rotation des stangenförmigen Werksstücks 10, um eine Drehbearbeitung durchführen zu können. Die Rotationsgeschwindigkeit kann hierzu entweder stufenlos oder in geeigneten Stufen eingestellt werden. Die zweite Werkstück-Spanneinrichtung 19 ist im einfachsten Fall als Spannfutter ausgebildet, sie kann jedoch ebenfalls in einer komfortableren Ausführung mit einer Drehantriebsvorrichtung versehen sein, die mehrere Rotationsgeschwindigkeiten zulässt, so dass sowohl eine Winkelpositionierung, wie auch eine Drehbearbeitung möglich ist.

Seitlich versetzt vor den Werkstück-Spanneinrichtungen 17, 19 ist eine horizontale Linearführung 20 am Maschinengestell 14 angeordnet. Sie dient zur horizontalen Linearbewegung einer Greifeinrichtung 21, die in Figur 2 detaillierter und perspektivisch dargestellt ist. Diese Greifeinrichtung 21 besteht aus zwei motorisch gegeneinander bewegbaren Spannbacken 22, 23, wobei jeder Spannbacken 22, 23 an seinem freien Endbereich gegenüberliegend ein rotierbar gelagertes Werkstück-Anlageelement 24, 25 aufweist. Das Werkstück-Anlageelement 25 besitzt dabei einen motorischen Schwenkantrieb 26, der eine Verschwenkung von wenigstens 180° zulässt. Die Werkstück-Anlageelemente 24, 25 sind dabei auswechselbar an den Spannbacken 22, 23 angeordnet, um eine Anpassung an verschiedene Werkstückformen durchführen zu können. Zum Spannen des Werkstücks 10 bzw. des abgetrennten Werkstückteils 11 werden die Spannbacken 22, 23 gegeneinander gefahren, worauf dann durch Rotation der Werkstück-Anlageelemente 24, 25 das Werkstückteil 11 um 180° geschwenkt werden kann.

An Stelle des dargestellten und beschriebenen Schwenkantriebs 26 kann beispielsweise auch ein pneumatisches oder elektrisches Stellglied im unteren Bereich der Greifeinrichtung 21 oder in einer der beiden Spannbacken 22, 23 angeordnet sein, durch das mittels einer Zahnstange und einem mit einem oder beiden Werkstück-Anlageelementen 24, 25 gekoppelten Zahnrad die Schwenkbewegung durchgeführt wird.

Im Folgenden wird nun der Arbeitsablauf erläutert. Zunächst wird der freie Endbereich des in der ersten Werkstück-Spanneinrichtung 17 eingespannten stangenförmigen Werkstücks 10 bearbeitet, beispielsweise gemäß Figur 1 mittels eines im Bearbeitungskopf 12 eingespannten Fräswerkzeugs 27. Neben der Stirnbearbeitung des Werkstücks 10 ist selbstverständlich auch eine Seitenbearbeitung möglich. Wenn verschiedene Werkzeuge zur Bearbeitung erforderlich sind, wird der Bearbeitungskopf 12 mittels der Schlittenanordnung 13 nach hinten, also in die Zeichenebene hinein bis zu einem nicht dargestellten Werkzeugmagazin verfahren, das beispielsweise als Trommelmagazin ausgebildet sein kann, und der Werkzeugwechsel kann durch Rotation des Magazins und/oder Bewegungen des Bearbeitungskopfs 12 erfolgen. Falls eine Drehbearbeitung erforderlich ist, so wird ein Drehwerkzeug aus dem Werkzeugmagazin entnommen, wobei bei dieser Bearbeitungsart das stangenförmige Werkstück 10 mit einer für die Drehbearbeitung erforderlichen Rotationsgeschwindigkeit rotiert, während der Bearbeitungskopf 12 nicht rotiert, sondern eine für die Drehbearbeitung erforderliche Linearbewegung in einer oder in beiden horizontalen Bewegungsrichtungen ausführt. Während dieser Bearbeitung bleibt die Greifeinrichtung 21 außerhalb des Bearbeitungsbereichs positioniert, wie dies in Figur 1 dargestellt ist.

Ist die endseitige Bearbeitung des stangenförmigen Werkstücks 10 abgeschlossen, so wird die Greifeinrichtung 21 in die in Figur 3 dargestellte Arbeitsposition bewegt. Falls erforderlich, wird hierzu der Schlitten 16 nach oben gefahren, damit die Greifeinrichtung 21 passieren kann, und anschließend wieder soweit nach unten gefahren, bis der Endbereich des stangenförmigen Werkstücks 10 zwischen den Spannbacken 22, 23 der Greifeinrichtung 21 positioniert ist. Durch Zusammenfahren der Spannbacken 22, 23 erfolgt ein Festspannen des weiterhin auch von der ersten Werkstück-Spanneinrichtung 17 gehaltenen Werkstücks 10 in der Greifeinrichtung 21. Nun holt sich der Bearbeitungskopf 12 ein Trennwerkzeug 28, beispielsweise eine Säge aus dem Werkzeugmagazin und trennt den einseitig bearbeiteten Endbereich des stangenförmigen Werkstücks 10 in der gewünschten Länge ab, so dass ein separates Werkstückteil 11 gebildet wird. Zur Unterstützung des Abtrennvorgangs, insbesondere bei Werkstücken 10 mit größerem Durchmesser vollführt die erste Werkstück-Spanneinrichtung 17 eine langsame Rotationsbewegung.

Nach dem Abtrennvorgang wird das Trennwerkzeug 28 in das Werkzeugmagazin zurückgelegt, der Schlitten 16 wird soweit nach oben gefahren, bis das in der Greifeinrichtung 21 eingespannte Werkstückteil 11 mit der zweiten Werkstück-Spanneinrichtung 19 fluchtet, durch eine Schwenkbewegung der Werkstück-Anlageelemente 24, 25 wird das Werkstückteil 11 um 180° geschwenkt, und durch eine Linearbewegung der Greifeinrichtung 21 nach links wird der bearbeitete Bereich des Werkstückteils 11 in die Werkstück-Spanneinrichtung 19 eingeführt und dort festgespannt, so dass der bisher unbearbeitete Endbereich des Werkstückteils 11 aus der zweiten Werkstück-Spanneinrichtung 19 herausragt. Die Greifeinrichtung 21 wird nun vom Werkstückteil 11 gelöst und kann wieder in die in Figur 1 dargestellte Warteposition gefahren werden, wozu je nach Platzverhältnissen der Schlitten 16 kurzzeitig nach oben gefahren werden muss. Falls es die Platzverhältnisse zulassen, so kann die Greifeinrichtung 21 selbstverständlich auch im Arbeitsbereich verbleiben.

Nun erfolgt die Endbearbeitung des bisher unbearbeiteten Endbereichs des Werkstückteils 11 durch den Bearbeitungskopf 12, wobei wiederum bei Bedarf verschiedene Fräswerkzeuge eingesetzt werden können. Auch die zweite Werkstück-Spanneinrichtung 19 kann mit einer Drehantriebsvorrichtung versehen sein, so dass sowohl eine Werkstückpositionierung, wie auch bei einer komfortableren Ausführung eine Drehbearbeitung des zweiten Endbereichs des Werkstückteils 11 möglich ist. Hierdurch ist an den Mantelflächen auch eine Schrägbearbeitung bis hin zur 5-Achs-Bearbeitung möglich.

Nach abgeschlossener Bearbeitung wird das fertige Werkstückteil 11 wiederum mittels der Greifeinrichtung 21 durch Linearbewegung aus der zweiten Werkstück-Spanneinrichtung 19 entnommen und einer nicht dargestellten Werkstückablage außerhalb des Bearbeitungsbereichs zugeführt. Die Linearführung 12 erstreckt sich hierzu bis zu dieser Werkstückablage.

Der Vorschub für das stangenförmige Werkstück 11 zur Herstellung des nächsten Werkstückteils 11 erfolgt entweder mittels der Greifeinrichtung 21 vor oder nach der Bearbeitung des ersten Endbereichs des Werkstücks 10 gemäß Figur 1 oder durch das Trennwerkzeug 28, in dem dieses vor dem vollständigen Abtrennen teilweise in das Werkstück 10 einsägt, worauf dann durch Linearbewegung des Bearbeitungskopfs 12 das Werkstück 10 aus der ersten Werkstück-Spanneinrichtung 17 in dem erforderlichen Maße herausgezogen wird. Auch andere für sich bekannte Vorschubeinrichtungen können selbstverständlich eingesetzt werden.

In Abwandlung des dargestellten Ausführungsbeispiels können auch horizontale und vertikale Bewegungsrichtungen variiert bzw. ausgetauscht werden, wobei insbesondere bei sehr langen stangenförmigen Werkstücken 10 die horizontale Position die geeignetste ist.

In einer alternativen Ausgestaltung kann der Schlitten 16 als Schlittenanordnung ausgebildet sein, der auch eine Horizontalbewegung gestattet, wobei dann die Schlittenanordnung 13 nur noch in der dritten Bewegungsrichtung bewegt werden muss, nämlich der Bewegungsrichtung zum Werkzeugmagazin hin.

In einer einfacheren Version kann der Schwenkantrieb 18 entfallen, wobei andererseits auch der Bearbeitungskopf 12 mit einem Schwenkantrieb versehen sein kann.

## Patentansprüche

1. Maschine zur spanenden Bearbeitung von Werkstücken (10), insbesondere stangenförmigen Werkstücken, mit einer Werkstück-Spanneinrichtung (17), die mit einer Drehantriebsvorrichtung zur Winkelpositionierung des eingespannten Werkstücks (10) versehen ist, mit einem eine Drehantriebsvorrichtung aufweisenden Bearbeitungskopf (12) zur Aufnahme von Bearbeitungswerkzeugen (27, 28), mit einer Schlittenanordnung (13, 16) zur Relativbewegung von Werkstück-Spanneinrichtung (17) und Bearbeitungskopf (12) in den drei Raumrichtungen (XYZ), wobei die Werkstück-Spanneinrichtung (17) in wenigstens einer der drei Raumrichtungen (X) bewegbar ist, und mit einer eine Schwenkeinrichtung (24, 25, 26) aufweisenden Greifeinrichtung (21) zum Ergreifen und Umsetzen eines in einer ersten Spannposition bearbeiteten und vom Werkstück (10) abgetrennten Werkstückteils (11) in eine zweite Spanneinrichtung zur übrigen Bearbeitung, **dadurch gekennzeichnet, dass** die zweite als Werkstück-Spanneinrichtung (19) ausgebildete Spanneinrichtung mit der ersten Werkstück-Spanneinrichtung (17) gekoppelt ist, und dass die mit einem Linearantrieb versehene Greifeinrichtung (21) senkrecht zu der wenigstens einen Bewegungsrichtung (X) der Werkstück-Spanneinrichtungen (17, 19) bewegbar ist.

2. Maschine nach Anspruch 1, **dadurch gekennzeichnet, dass** die Werkstück-Spanneinrichtungen (17, 19) fest miteinander verbunden sind.

3. Maschine nach Anspruch 1 oder 2, **dadurch gekennzeichnet, dass** die erste Werkstück-Spanneinrichtung (17) an einem ersten, in einer Bewegungsrichtung motorisch bewegbaren Schlitten (16) angeordnet ist, insbesondere in der vertikalen Bewegungsrichtung (X), und dass der Bearbeitungskopf (12) an einem zweiten, in den anderen beiden Bewegungsrichtungen (Y, Z) motorisch bewegbaren Schlitten oder Schlittenanordnung (13) angeordnet ist.

4. Maschine nach Anspruch 3, **dadurch gekennzeichnet, dass** die erste Werkstück-Spanneinrichtung (17) und/oder der Bearbeitungskopf (12) über einen Schwenkantrieb (18) am Schlitten (16) montiert ist.

5. Maschine nach Anspruch 3 oder 4, **dadurch gekennzeichnet, dass** der zweite Schlitten (13) oder die zweite Schlittenanordnung zum Verfahren des Bearbeitungskopfs (12) zwischen der Bearbeitungsposition und einer Werkzeugwechselposition im Bereich eines Werkzeugmagazins ausgebildet ist.

6. Maschine nach Anspruch 5, **dadurch gekennzeichnet, dass** im Werkzeugmagazin ein Trennwerkzeug (28) zum Abtrennen des einseitig bearbeiteten Werkstückteils (11) vom Werkstück (10) enthalten ist.

7. Maschine nach einem der vorhergehenden Ansprüche, **dadurch gekennzeichnet, dass** die Drehantriebsvorrichtung der ersten Werkstück-Spanneinrichtung (17) auch eine zur Drehbearbeitung geeignete Rotationsgeschwindigkeit aufweist, wobei vorzugsweise auch die zweite Werkstück-Spanneinrichtung (19) mit einer derartigen Drehantriebsvorrichtung versehen ist.

8. Maschine nach einem der vorhergehenden Ansprüche, **dadurch gekennzeichnet, dass** die Greifeinrichtung (21) zwei Spannbacken (22, 23) besitzt, von denen jeder mit einem rotierbaren Werkstück-Anlageelement (24, 25) versehen ist, von denen vorzugsweise wenigstens eines mit einem motorischen Antrieb (26) versehen ist.

9. Maschine nach Anspruch 8, **dadurch gekennzeichnet, dass** unterschiedliche Werkstück-Anlageelemente (24, 25) austauschbar vorgesehen sind.

10. Maschine nach einem der vorhergehenden Ansprüche, **dadurch gekennzeichnet, dass** die Greifeinrichtung (21) entlang einer Linearführung (20) bewegbar ist, die vorzugsweise horizontal verläuft, und die sich von der Arbeitsposition bis zu einer Ablageposition für die fertig bearbeiteten Werkstückteile (11) erstreckt.
